# EUROPÄISCHE PATENTSCHRIFT

(11) **EP 2 789 086 B1**
(45) Veröffentlichungstag und Bekanntmachung des Hinweises auf die Patenterteilung: **27.06.2018**
(21) Anmeldenummer: 12805968.0
(22) Anmeldetag: 29.11.2012
(51) Int. Cl.: H02M 3/337, H02M 1/36, H02M 1/08

(54) **SPANNUNGSWANDLER FÜR EIN KRAFTFAHRZEUG**
VOLTAGE CONVERTER FOR A MOTOR VEHICLE
CONVERTISSEUR DE TENSION POUR VÉHICULE À MOTEUR

(30) Priorität: 09.12.2011 DE 102011088169
(43) Veröffentlichungstag der Anmeldung: 15.10.2014
(73) Patentinhaber: Robert Bosch GmbH, 70442 Stuttgart (DE)
(72) Erfinder: KOCH, Stefan, 77876 Kappelrodeck (DE); TIAN, Jian, 77815 Buehl (DE); BERGMANN, Ralf-Peter, 77880 Sasbach (DE)
(86) Internationale Anmeldenummer: PCT/EP2012/073960
(87) Internationale Veröffentlichungsnummer: WO 2013/083473

(56) Entgegenhaltungen:
- EP-A2- 0 177 148
- DE-A1- 3 231 788
- DE-A1-102005 047 055
- BALOGH L: "Design and application guide for high speed MOSFET gate drive circuits", INTERNET CITATION, 1. Januar 2001 (2001-01-01), Seiten 1-37, XP002552367, Gefunden im Internet: URL:http://focus.ti.com/lit/ml/slup169/slu p169.pdf [gefunden am 2009-10-26]

## Beschreibung

### Stand der Technik

Die Erfindung betrifft einen Spannungswandler für ein Kraftfahrzeug. Der Spannungswandler weist einen Transformator und eine Leistungsendstufe auf. Die Leistungsendstufe weist wenigstens zwei mit dem Transformator, insbesondere einer Primärwicklung des Transformators, verbundene Halbleiterschalter auf. Der Spannungswandler weist eine Treiberstufe auf, welche ausgangsseitig mit einem Steueranschluss des Halbleiterschalters verbunden und ausgebildet ist, den Halbleiterschalter zum Erzeugen einer Wechselspannung mit einem Steuersignal anzusteuern.

In der EP 0 177 148 A2 wird ein Spannungswandler mit einem Transformator, einer Treiberstufe und einer Leistungsendstufe offenbart, bei der ein Kondensator der Treiberstufe, welcher diese mit Schaltenergie versorgen kann, mit genau einem auf einen Schaltpuls folgenden Nachpuls geladen werden kann. Es sind aber keine Leistungsendstufen mit einer Vollbrücke entnehmbar.

### Offenbarung der Erfindung

Die Erfindung betrifft eine Vorrichtung gemäß Anspruch 1. Alle technischen Merkmale des unabhängigen Anspruchs sind erforderlich und nicht optional, unabhängig von dem widersprechenden Aussagen in den folgenden Textpassagen. Bevorzugte Ausführungsformen werden in den abhängigen Ansprüchen beschrieben. Erfindungsgemäß ist die Treiberstufe eingangsseitig mit einem Pulssignalerzeuger und einer Eingangskapazität verbunden. Der Pulssignalerzeuger ist ausge-Durch das Erzeugen des Vorpulses wird die Eingangskapazität vorteilhaft vorgeladen. Dadurch kann eine von der Leistungsendstufe ausgangsseitig erzeugte Wechselspannung vorteilhaft eine steile Flanke zu Beginn der Wechselspannung aufweisen.

In einer vorteilhaften Ausführungsform sind zwei ein Halbleiterschalterpaar bildende Halbleiterschalter, insbesondere Schaltstrecken der Halbleiterschalter, mit der Primärwicklung des Transformators in Serie verbunden.

Bevorzugt ist die Treiberstufe ausgebildet, einen Halbleiterschalter des mit dem Transformator, insbesondere der Primärwicklung des Transformators, in Serie geschalteten Halbleiterschalterpaares durch den Vorpuls durchzuschalten, wobei die Treiberstufe ausgebildet ist, den weiteren Halbleiterschalter des Halbleiterschalterpaares während des Vorpulses zu sperren. Dadurch kann vorteilhaft die Eingangskapazität mittels des Vorpulses vorgeladen werden, wohingegen die Eingangskapazität während eines durchgeschalteten Zustandes der Halbleiterschalter des Halbleiterschalterpaares - gesteuert durch die Treiberstufe - sowohl über die Halbleiterschalter als auch über die Primärwicklung des Transformators entladen wird. Mittels der so gebildeten Schaltungsanordnung umfassend eine Leistungsendstufe mit einem Halbleiterschalterpaar kann ein Spannungswandler zum Erzeugen eines Spannungspulses oder einer Folge von Spannungspulsen gebildet sein. Das Halbleiterschalterpaar ist bevorzugt durch einen High-Side-Halbleiterschalter und einen Low-Side-Halbleiterschalter gebildet.

Bevorzugt ist die Treiberstufe ausgebildet, die Halbleiterschalter des Halbleiterschalterpaares nach Erzeugen des Hauptpulses gemeinsam durchzuschalten. Dadurch kann die durch den Vorpuls und den Hauptpuls repräsentierte elektrische Energie die in der Eingangskapazität zwischengespeichert ist, zum Erzeugen der Wechselspannung, insbesondere einer Halbwelle der Wechselspannung, über die Primärwicklung des Transformators entladen werden.

In einer bevorzugten Ausführungsform weist der Spannungswandler zwei Halbleiterschalter-Halbbrücken auf. Die Halbleiterschalter-Halbbrücken weisen jeweils einen High-Side-Halbleiterschalter und einen Low-Side-Halbleiterschalter auf. Die Halbleiterschalter-Halbbrücken sind jeweils ausgangsseitig mit zueinander verschiedenen Anschlüssen der Primärwicklung des Transformators verbunden.

So ist mittels der zwei Halbleiterschalter-Halbbrücken eine H-Brücke, auch VollBrücke genannt gebildet, bei der die Ausgänge der Halbbrücken über eine Ausgangslast, insbesondere die Primärwicklung miteinander verbunden sind.

Ein Ausgang einer Halbbrücke ist im Falle eines Feldeffekt-Transistors als Halbleiterschalter durch einen Verbindungsknoten zwischen einem Source-Anschluss des High-Side-FET und einem Low-Side-FET gebildet.

Der Pulssignalerzeuger ist bevorzugt ausgebildet, die Treiberstufe derart anzusteuern, dass beim Erzeugen des Vorpulses für einen Halbleiterschalter ein Stromfluss durch den Transformator gesperrt ist. Dadurch kann die Primärspule des Transformators während eines zeitlich darauf folgenden Durchschaltens von zwei zueinander komplementären Halbleiterschaltern der Leistungsendstufe, beispielsweise eines High-Side-Halbleiterschalters der ersten Halbbrücke und eines Low-Side-Halbleiterschalters der zweiten Halbbrücke, die in der Eingangskapazität gespeicherte elektrische Energie über die so durchgeschalteten komplementären Halbleiterschalter über die Primärwicklung des Transformators wenigstens teilweise entladen werden.

Bevorzugt ist der Pulssignalerzeuger ausgebildet, Vorpulse für die zwei Transistor-Halbbrücken derart zeitlich zueinander beabstandet zu erzeugen, dass der Transformator durch die Vorpulse nicht bestromt werden kann. Bevorzugt ist der Pulssignalerzeuger ausgebildet, die Transistoren der zwei Halbbrücken jeweils zeitlich aufeinanderfolgend mit einem Vorpuls zu beaufschlagen. Weiter bevorzugt ist während eines Vorpulses nur ein Transistor der zwei Halbbrücken durchgeschaltet. Dadurch kann die durch die Vorpulse repräsentierte elektrische Energie in der Eingangskapazität gespeichert werden.

In einer bevorzugten Ausführungsform ist der Pulssignalerzeuger ausgebildet, den High-Side-Halbleiterschalter und den Low-Side-Halbleiterschalter von einer Halbbrücke gleichzeitig mit einem Vorpuls zu beaufschlagen. Weiter bevorzugt ist die Treiberstufe ausgebildet, die Halbleiterschalter der weiteren Halbbrücke während des Durchschaltens der Halbleiterschalter der ersten Halbbrücke zu sperren. Dadurch kann die durch die Vorpulse repräsentierte elektrische Energie nicht über die Primärwicklung entladen werden.

Bevorzugt ist die Treiberstufe ausgebildet, die elektrische Ladung zum Schalten der Leistungsendstufe wenigstens teilweise aus dem Vorpuls zu erzeugen und dazu in der Eingangskapazität zwischenzuspeichern. Beispielsweise ist die Treiberstufe mit der Leistungsendstufe galvanisch verbunden. Die Leistungsendstufe und/oder die Treiberstufe ist bevorzugt von dem Pulssignalerzeuger - bevorzugt mittels eines Trenntransformators - galvanisch getrennt.

Durch die so gestaltete Ausführungsform der Treiberstufe kann diese vorteilhaft aufwandsgünstig bereitgestellt werden. Zum Erzeugen der Wechselspannung kann so vorteilhaft die Energie der von dem Pulssignalerzeuger erzeugten Vor- und Hauptpulse dienen.

Bevorzugt weist der Spannungswandler zum Erzeugen der Wechselspannung nur eine Spannungsquelle auf. Die Spannungsquelle ist bevorzugt durch den Pulssignalerzeuger gebildet.

Die Erfindung betrifft auch ein Verfahren zum gepulsten Ansteuern eines Spannungswandlers. Der Spannungswandler umfasst eine Treiberstufe mit einer Eingangskapazität, eine ausgangsseitig mit der Treiberstufe verbundene Leistungsendstufe und einen ausgangsseitig mit der Leistungsendstufe verbundenen Transformator.

Bevorzugt wird bei dem Verfahren ein Vorpuls erzeugt und die Eingangskapazität der Treiberstufe mit dem Vorpuls vorgeladen. Weiter wird zeitlich auf den Vorpuls folgend ein Hauptpuls erzeugt, wobei die Eingangskapazität zum Durchschalten der Leistungsendstufe - insbesondere durch ein Bestromen eines Steueranschlusses eines Halbleiterschalters der Leistungsendstufe mittels des Hauptpulses - wenigstens teilweise entladen wird. Die Eingangskapazität umfasst bevorzugt wenigstens einen Kondensator.

Bevorzugt werden bei dem Verfahren die Halbleiterschalter, insbesondere Transistoren der Leistungsendstufe jeweils zeitlich aufeinanderfolgend mit einem Vorpuls beaufschlagt.

Bevorzugt weist die Leistungsendstufe des Spannungswandlers zwei Halbleiterschalter-Halbbrücken jeweils umfassend einen High-Side-Halbleiterschalter und einen Low-Side-Halbleiterschalter auf, wobei die Halbleiterschalter-Halbbrücken jeweils ausgangsseitig mit einem Anschluss einer Primärwicklung des Transformators verbunden sind, wobei bei dem Verfahren die Halbleiterschalter einer Halbleiterschalter-Halbbrücke gleichzeitig mit einem Vorpuls beaufschlagt werden.

Der Halbleiterschalter ist bevorzugt durch einen Thyristor, einen Transistor, insbesondere einen Feldeffekt-Transistor oder einen IGBT (IGBT = Insulated-Gate-Bipolar-Transistor) gebildet.

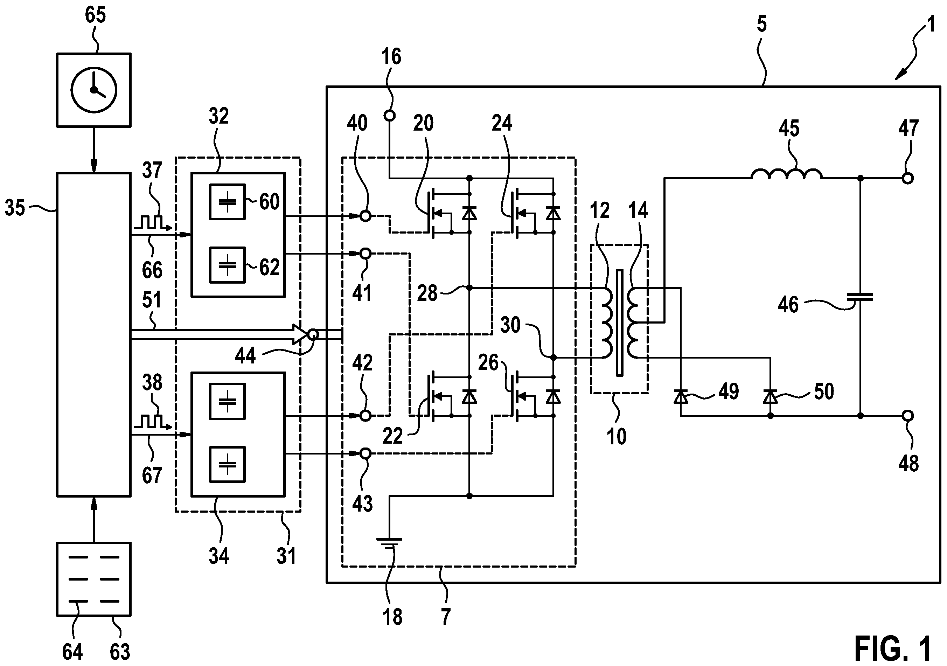

Die Erfindung wird nun im Folgenden anhand von Figuren und weiteren Ausführungsbeispielen beschrieben.
Figur 1 zeigt ein Ausführungsbeispiel für einen Spannungswandler mit einer Leistungsendstufe und einer Treiberstufe für die Leistungsendstufe, wobei Treiber der Treiberstufe jeweils ausgebildet sind, eine elektrische Energie zum Beschalten von Steueranschlüssen von Halbleiterschaltern der Leistungsendstufe aus einer Folge von Pulssignalen zu beziehen.
Figur 2 zeigt ein Ausführungsbeispiel für einen Treiber der in Figur 1 dargestellten Treiberstufe;
Figur 3 zeigt ein Ausführungsbeispiel für eine Pulssignalmuster zum Ansteuern der in Figur 1 dargestellten Treiberstufe;
Figur 4 zeigt ein Ausführungsbeispiel für ein Pulssignalmuster zum Ansteuern der in Figur 1 dargestellten Treiberstufe;
Figur 5 zeigt ein Ausführungsbeispiel für ein Steuersignal der in Figur 1 dargestellten Treiberstufe, das ohne die in den Figuren 3 und 4 gezeigten Pulssignalmuster erzeugt worden ist und durch die in den Figuren 3 und 4 beschriebenen Pulssignalmuster verbessert werden kann.
In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung. Figur 1 zeigt ein Ausführungsbeispiel für einen Spannungswandler 1. Der Spannungswandler 1 weist einen Wechselrichter 5 auf. Der Wechselrichter 5 weist eine Leistungsendstufe 7 mit einer H-Brücke umfassend zwei Transistor-Halbbrücken auf. Der Wechselrichter 5 weist auch einen Transformator 10 auf. Der Transformator 10 weist eine Primärspule 12 und eine Sekundärspule 14 auf. Die erste Halbbrücke der Leistungsendstufe 7, umfassend einen High-Side-Transistor 20 und einen Low-Side-Transistor 22 ist mit einem Ausgang, repräsentiert durch den Verbindungsknoten 28, mit einem ersten Anschluss der Primärspule 12 des Transformators 10 verbunden. Die zweite Halbbrücke der Leistungsendstufe 7, umfassend einen High-Side-Transistor 24 und einen Low-Side-Transistor 26, ist ausgangsseitig über einen Verbindungsknoten 30 mit dem zweiten Anschluss der Primärspule 12 des Transformators 10 verbunden.

Der High-Side-Transistor 20 und der Low-Side-Transistor 26 bilden somit ein Halbleiterschalterpaar, das aus zueinander komplementären Transistoren von zwei zueinander verschiedenen Transistor-Halbbrücken der H-Brücke gebildet ist.

Der Transformator 10, insbesondere die Sekundärspule 14 des Transformators 10, weist einen Mittelabgriff auf, welcher über eine Drosselspule 45 mit einem Ausgang 47 des Wechselrichters 5 verbunden ist. Die Sekundärspule 14 weist neben dem Mittelabgriff einen ersten und einen zweiten Anschluss der Sekundärspule 14 auf, wobei der erste Anschluss über eine Gleichrichterdiode 49 mit einem weiteren ausgangsseitigen Anschluss 48 des Wechselrichters 5 verbunden ist. Der weitere Anschluss 48 repräsentiert einen Masseanschluss, oder einen Minuspol des Spannungswandlers 1 am Ausgangsanschluss, der Anschluss 47 repräsentiert einen Pluspol des Spannungswandlers 1 am Ausgangsanschluss. Der zweite Anschluss der Sekundärspule 14 ist über eine Gleichrichterdiode 50 mit dem Ausgangsanschluss 48 verbunden. Der Ausgangsanschluss 47 ist über einen Kondensator 46 mit dem Ausgangsanschluss 48 verbunden. Der Kondensator 46 repräsentiert gemeinsam mit der Drosselspule 45 ein Tiefpassfilter.

Die Low-Side-Transistoren 22 und 26 sind jeweils mit einem Source-Anschluss mit einem Masseanschluss 18 verbunden. Die Drain-Anschlüsse der High-Side-Transistoren 20 und 24 sind jeweils mit einem Anschluss 16 für eine Versorgungsspannung verbunden. Der Source-Anschluss des High-Side-Transistors 20 ist über den Verbindungsknoten 28 mit dem Drain-Anschluss des Low-Side-Transistors 22 verbunden. Der Source-Anschluss des Transistors 24 ist über den Verbindungsknoten 30 mit dem Drain-Anschluss des Low-Side-Transistors 26 verbunden. Die Transistoren 20, 22, 24 und 26 sind jeweils als MOS-FET-Transistoren (MOS-FET = Metal-Oxide-Semiconductor-Field-Effect-Transistor) ausgebildet.

Die Leistungsendstufe 7 weist in diesem Ausführungsbeispiel vier Steuereingänge 40, 41, 42 und 43 auf, welche jeweils mit einem Gate-Anschluss eines Transistors der Leistungsendstufe 7 verbunden ist. Der Steuereingang 40 ist mit dem Gate-Anschluss des Transistors 20, der Steuereingang 41 mit dem Gate-Anschluss des Low-Side-Transistors 22 verbunden, der Steuereingang 42 ist mit dem Gate-Anschluss des High-Side-Transistors 24 verbunden, und der Steuereingang 43 ist mit dem Gate-Anschluss des Low-Side-Transistors 26 verbunden. Die Steuereingänge 40 und 41 sind jeweils mit einem Treiber 32 einer Treiberstufe 31 verbunden. Die Treiberstufe 31 weist neben dem Treiber 32 auch einen Treiber 34 auf, welcher ausgangsseitig mit den Steuereingängen 42 und 43 verbunden ist. Die Treiber 32 und 34 sind jeweils ausgebildet, eingangsseitig ein Pulssignal zu empfangen und in Abhängigkeit des Pulssignals ein Steuersignal zum Ansteuern, insbesondere zum Durchsteuern oder Sperren eines Gate-Anschlusses zu erzeugen und ausgangsseitig auszugeben. Der Treiber 34 ist ausgangsseitig über eine Verbindungsleitung mit dem Steuereingang 42 der Leistungsendstufe 7 und mit einer weiteren Verbindungsleitung mit dem Steuereingang 43 der Leistungsendstufe 7 verbunden. Der Treiber 34 ist ausgebildet, in Abhängigkeit eines eingangsseitig empfangenen Pulssignals, beispielsweise des in Figur 1 dargestellten Pulssignals 38, ein Steuersignal zum Ansteuern eines Gate-Anschlusses des Transistors 24 und/oder 26 zu erzeugen und dieses ausgangsseitig auszugeben.

Der Spannungswandler 1 weist auch einen Pulssignalerzeuger 35 auf. Der Pulssignalerzeuger 35 ist eingangsseitig mit einem Zeitgeber 65, und mit einem Speicher 63 verbunden. In dem Speicher 63 sind Datensätze vorrätig gehalten, welche jeweils ein Ansteuermuster zum Ansteuern der Leistungsendstufe 7 repräsentieren. Der Datensatz 64 ist beispielhaft bezeichnet.

Der Pulssignalerzeuger 35 ist ausgangsseitig über eine Verbindungsleitung 66 mit dem Treiber 32, und über eine Verbindungsleitung 67 mit dem Treiber 34 verbunden. Der Pulssignalerzeuger 35 ist auch ausgangsseitig über eine Verbindung 51, beispielsweise eine mehrkanalige Verbindung, mit einem Steuereingang 41 der Leistungsendstufe 7 verbunden. Der Steuereingang 44 der Leistungsendstufe 7 ist beispielsweise durch einen Inhibit-Eingang gebildet.

Der Pulssignalerzeuger 35 ist ausgebildet, durch Ansteuern der Leistungsendstufe über den Steuereingang 44 wenigstens einen der Transistoren 20, 22, 24 und 26 zu sperren.

Je nach vorgesehenem Pulssignalmuster wird zum Verhindern eines Stromflusses durch die Primärspule 12 des Transformators 10 der entsprechende Transistor einer Transistorhalbbrücke über den Steuereingang 44 gesperrt, wenn ein Transistor einer weiteren Halbbrücke durchgeschaltet ist.

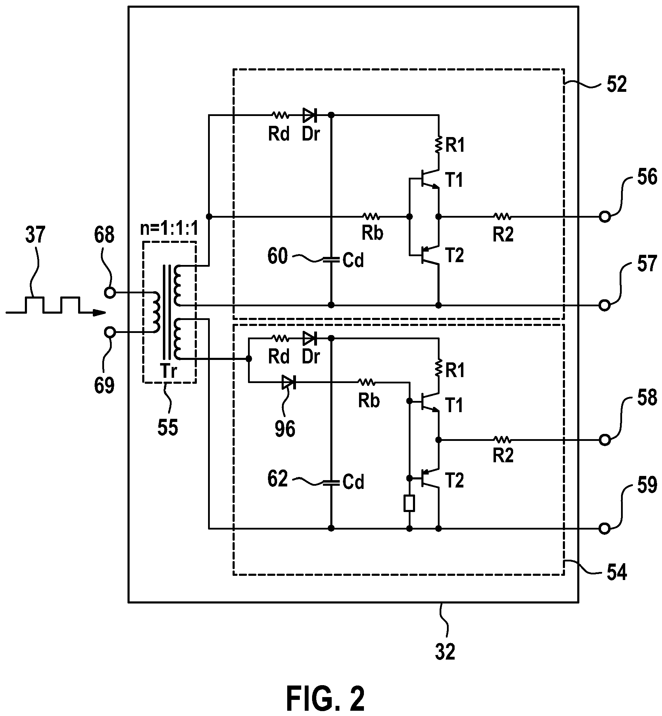

So kann - wie im Folgenden anhand von den Figuren 2, 3 und 4 noch näher erläutert wird - eine Eingangskapazität der Treiber 32 und 34, insbesondere repräsentiert durch einen Kondensator, vor einem Senden eines Hauptpulses zum Bestromen der Primärspule 12 des Transformators 10 vorgeladen werden.

Die Kondensatoren 60 und 62 des Treibers 32 sind beispielhaft bezeichnet. Das Pulssignal 37, welches von dem Pulssignalerzeuger 35 erzeugt worden ist, weist dazu Vorpulse zum Laden der Kondensatoren 60 und 62 auf. Zum Laden des Kondensators 60 weist das Pulssignal 37 beispielsweise einen Vorpuls zum Durchsteuern des Transistors 20 auf.

Zum Laden des Kondensators 62 weist das Pulssignal 37 einen Vorpuls zum Durchsteuern des Transistors 22 auf. Die Transistoren 20 und 22 einer Transistor-Halbbrücke der Leistungsendstufe 7 können so jeweils durch das Pulssignal 37 durchgesteuert werden. Die Transistoren 24 und 26 sind während des Durchsteuerns der Transistoren 20 und 22 jeweils durch ein vom Pulssignalerzeuger 35 erzeugtes Inhibit-Signal, empfangen über die Verbindung 51 und den Steuereingang 44, gesperrt. So kann kein Strom durch die Primärspule 12 fließen. Das bewirkt, dass die in den Kondensatoren 60 und 62 gespeicherte elektrische Ladung, welche im Falle eines Bestromens der Primärspule 12 zum niederohmigen Verbinden der Schaltstrecke der Transistoren 20 bzw. 22 verbraucht werden würde, in den Kondensatoren 60 beziehungsweise 62 angesammelt werden kann.

Der Zeitgeber 65 weist beispielsweise einen Schwingquarz auf und ist ausgebildet, ein einen Zeittakt repräsentierendes Zeitsignal zu erzeugen und auszugeben.

Figur 2 zeigt ein Ausführungsbeispiel für den in Figur 1 bereits dargestellten Treiber 32 der Treiberstufe 31. Der Treiber 32 weist einen Eingangsübertrager 55 auf, dessen Eingänge 68 und 69 mit einer Primärspule des Eingangsübertragers 55 verbunden sind. Dargestellt ist auch das Pulssignal 37, welches an den Eingängen 68 und 69 empfangen werden kann.

Der Eingangsübertrager 55 weist zwei Sekundärspulen auf, wobei eine erste Sekundärspule mit einem Treiber 52 für eine High-Side, insbesondere den in Figur 1 bereits dargestellt High-Side-Transistor 20, und eine zweite Sekundärspule mit einem Treiber 54 für eine Low-Side, insbesondere den in Figur 1 bereits dargestellten Low-Side-Transistor 22 verbunden ist. Der Treiber 52 weist den in Figur 1 bereits erwähnten Kondensator 60 auf. Der Treiber 54 weist auch den in Figur 1 bereits erwähnten Kondensator 62 auf. Der Kondensator 60 ist zu der ersten Sekundärspule über eine Gleichrichterdiode parallel geschaltet. Der Kondensator 62 ist zu einer Reihenschaltung umfassend die zweite Sekundärspule und wenigstens eine Gleichrichterdiode parallel geschaltet. Die Treiber 52 und 54 weisen jeweils eine Komplementärendstufe auf, wobei die Komplementärendstufe des Treibers 52 ausgangsseitig mit einem Ausgangsanschluss 56 für den Gate-Anschluss des in Figur 1 dargestellten Transistors 20 verbunden ist. Die Komplementärendstufe umfasst jeweils einen PNP- und einen NPN-Transistor, deren Emitter-Kollektorstrecken miteinander in Serie geschaltet sind.

Die Komplementärendstufe des Treibers 54 für die Low-Side weist eingangsseitig eine Schutzdiode 96 auf, welche einen ansteigenden Basis-Emitter-Strom der Komplementärendstufe verhindern kann.

Der Ausgangsanschluss 56 ist in Figur 1 mit dem Steuereingang 40 verbunden. Der Treiber 52 weist auch einen Ausgangsanschluss 57 zum Verbinden mit einem Source-Anschluss eines Transistors, in diesem Ausführungsbeispiel mit dem Source-Anschluss des High-Side-Transistors 20 auf. Der Ausgangsanschluss 57 ist mit dem Masseanschluss des Treibers 52 verbunden und bildet so ein Bezugspotenzial zu dem Ausgangsanschluss 56. Der Treiber 54 weist einen Ausgangsanschluss 58 für einen Gate-Anschluss des Low-Side-Transistors 22 und einen Ausgangsanschluss 59 zum Verbinden mit einem Source-Anschluss des Low-Side-Transistors 22 auf.

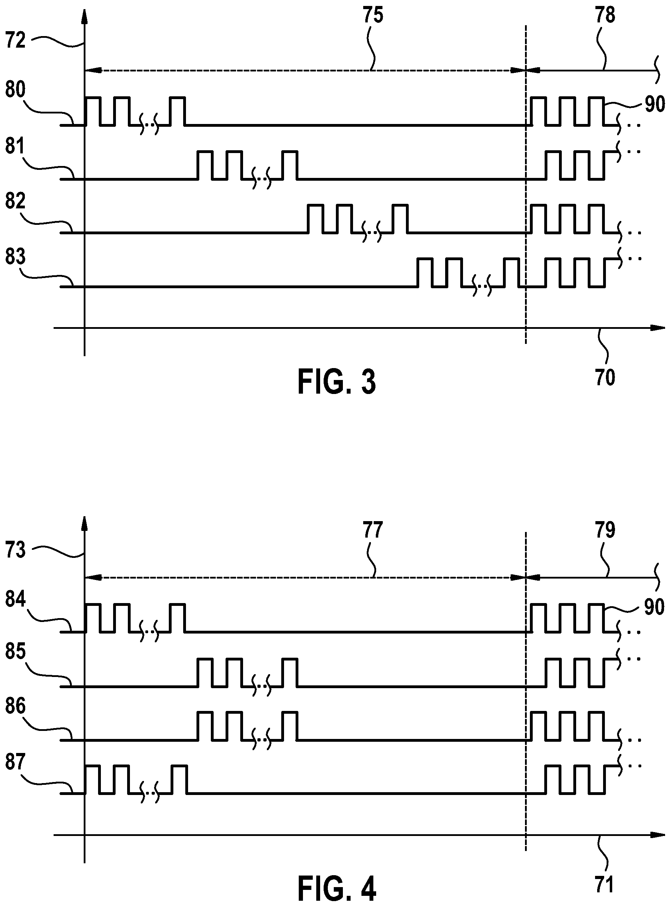

Der Treiber 52 und der Treiber 54 sind jeweils ausgebildet, in Abhängigkeit eines periodischen Eingangssignals zueinander gespiegelte Ausgangssignale zu erzeugen. Das ist im Folgenden in Figur 3 im Zeitabschnitt 79 dargestellt.

Figur 3 zeigt ein Diagramm, in welchem Steuersignale dargestellt sind, welche jeweils in Abhängigkeit wenigstens eines von dem in Figur 1 dargestellten Pulssignalerzeuger 35 erzeugten Pulssignals erzeugt worden sind. Mittels der in Figur 3 dargestellten Steuersignale kann die in Figur 1 dargestellte Leistungsendstufe 7, insbesondere die Schalttransistoren der Leistungsendstufe 7, zum Durchschalten angesteuert werden. Dargestellt ist ein Steuersignal 80 zum Ansteuern des High-Side-Transistors 20 der Leistungsendstufe 7, ein Steuersignal 81 zum Steuern des Low-Side-Transistors 22 der Leistungsendstufe 7, ein Steuersignal 82 zum Ansteuern des Low-Side-Transistors 26 der Leistungsendstufe 7 und ein Steuersignal 83 zum Ansteuern des High-Side-Transistors 24 der Leistungsendstufe 7. Das Steuersignal 80 weist in diesem Ausführungsbeispiel eine Mehrzahl von Vorpulsen auf, wobei der Pulssignalerzeuger 35 in Figur 1 ausgebildet ist, eine Anzahl von Vorpulsen derart zu erzeugen, dass der Kondensator 60 des Treibers 32 wenigstens bis zu einer vorbestimmten Spannung, beispielsweise wenigstens 10 Volt, aufgeladen werden kann. Während eines Zeitintervalls 75 wird so der Kondensator 60 zum Schalten des High-Side-Transistors 20 vorgeladen, ferner wird mittels Vorpulsen der Kondensator 62 für den Low-Side-Transistor 22 vorgeladen, was durch die Vorpulse des Pulssignals 81 im Zeitintervall 75 dargestellt ist.

Mittels weiterer Vorpulse des Pulssignals 82 kann der Kondensator für den Low-Side-Transistor 26 vorgeladen werden, und mittels weiterer Vorpulse des Pulssignals 83 kann der Kondensator für den High-Side-Transistor 24 vorgeladen werden. Während eines auf das Zeitintervall 75 folgenden Zeitintervalls 78, welches in Figur 3 mit einem zeitlichen Anfangsabschnitt dargestellt ist, kann dann die Leistungsendstufe 7 zum Bestromen der Primärspule 12 des Transformators 10 mittels Pulsen durchgesteuert werden, von denen der Puls 90 beispielhaft bezeichnet ist.

Das in Figur 3 gezeigte Diagramm weist eine Achse 70 auf, welches eine Zeitachse repräsentiert, und eine Achse 72, welches eine Amplitudenachse repräsentiert.

Figur 4 zeigt ein Diagramm mit einer Zeitachse 71 und einer Amplitudenachse 73. Während eines Zeitintervalls 77 wird mittels des Pulssignals 84 der High-Side-Transistor 20 angesteuert. Gleichzeitig wird mittels des Pulssignals 87 der High-Side-Transistor 24 angesteuert. Die Low-Side-Transistoren 22 und 26 sind während des Ansteuerns der High-Side-Transistoren 20 und 24 - beispielsweise durch Erzeugen eines Inhibit-Signals durch den Pulssignalerzeuger 35 und Beaufschlagen des Steuereingangs 44 mit dem Inhibit-Signal gesperrt. So kann die Primärspule 12 des Transformators 10 in Figur 1 während des Zeitintervalls 77 nicht bestromt werden. Die mittels der Pulse 84 und 87 in den Kondensatoren des Treibers 32 bzw. 34 gespeicherte Energie wird somit während des Zeitintervalls 77, in welchem die Vorpulse erzeugt werden, nicht verbraucht. Der Kondensator 60 kann so beispielsweise im Zeitintervall 77 eine Spannung von mindestens 10 Volt aufbauen.

Nach dem Durchsteuern der High-Side-Transistoren 20 und 24 mittels der zeitsynchronen Pulse 84 und 87 können dann die Low-Side-Transistoren 22 und 26 mittels der Pulse 85 bzw. 86 - in diesem Ausführungsbeispiel ebenfalls zueinander zeitsynchron - durchgesteuert werden. Das Zeitintervall 77 kann somit kürzer ausgebildet sein als das Zeitintervall 75. Mittels des in Figur 4 dargestellten Verfahrens können die Kondensatoren der Treiberstufen 32 und 34 schneller vorgeladen werden als mit dem in Figur 3 dargestellten Verfahren.

An das Zeitintervall 77 schließt ein Zeitintervall 79 an, welches mit einem zeitlichen Anfangsabschnitt dargestellt ist. Während des Zeitintervalls 79 werden von dem Pulssignalerzeuger 35 Hauptpulse erzeugt, mittels derer die Primärspule 12 des Transformators 10 bestromt werden kann. Während des Zeitintervalls 79 kann so mittels der in Figur 1 dargestellten Sekundärspule 14 eine Ausgangswechselspannung des Spannungswandlers 1 erzeugt werden, welche - mittels der Dioden 49 und 50 gleichgerichtet - an den Ausgangsanschlüssen 47 und 48 des Spannungswandlers 1 als Gleichspannung zur Verfügung gestellt werden kann.

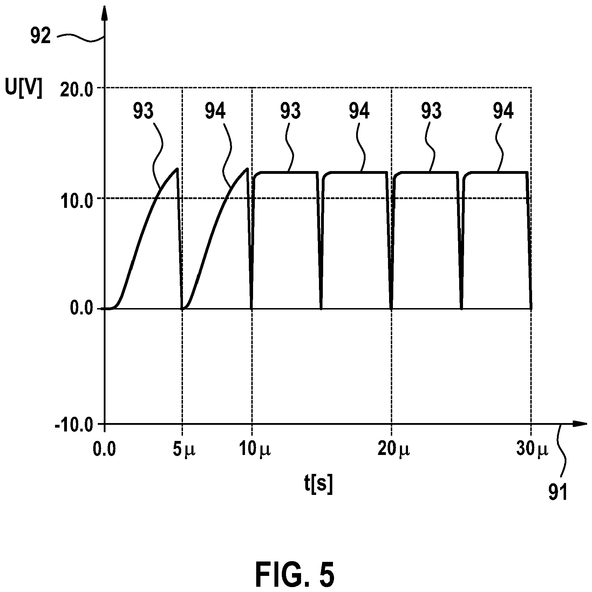

Figur 5 zeigt ein Diagramm, in welchem von der Treiberstufe 31 erzeugte Steuersignale zum Ansteuern der Halbbrücken der Leistungsendstufe 7 dargestellt sind. Dargestellt ist ein Steuersignal 93 für eine erste Halbbrücke der Leistungsendstufe 7, umfassend den High-Side-Transistor 20 und den Low-Side-Transistor 22, und ein Steuersignal 94 zum Ansteuern der zweiten Halbbrücke der Leistungsendstufe 7, umfassend den High-Side-Transistor 24 und den Low-Side-Transistor 26.

Sichtbar ist, dass die Steuersignale 92 und 94 jeweils während der ersten fünf Mikrosekunden eine ansteigende Flanke aufweisen. Die ansteigende Flanke wird dadurch bewirkt, dass die Kondensatoren der Treiberstufe 31 noch nicht vollständig geladen sind, wobei die Leistungsendstufe 7 bereits zum Bestromen der Primärspule 12 des Transformators 10 angesteuert wird.

Mittels der in den Figuren 3 und 4 beschriebenen Verfahren kann die ansteigende Flanke der Signale 93 und 94 vermieden werden. Wenn die Kondensatoren der in Figur 1 dargestellten Treiberstufe 31 während des in Figur 3 dargestellten Zeitintervalls 75 oder während des in Figur 4 dargestellten Zeitintervalls 77 vorbeladen werden, so kann bereits vom Beginn eines Erzeugens einer Wechselspannung mittels der Leistungsendstufe 7 die Leistungsendstufe 7 mittels eines rechteckförmigen Steuersignals angesteuert werden.

## Patentansprüche

1. Spannungswandler (1) für ein Kraftfahrzeug,
mit einem Transformator (10) und einer Leistungsendstufe (7), wobei die Leistungsendstufe (7) wenigstens zwei mit dem Transformator (10), insbesondere einer Primärwicklung (12) des Transformators (10), verbundene Halbleiterschalter (20, 22, 24, 26) aufweist, und der Spannungswandler (1) eine Treiberstufe (31) aufweist, welche ausgangsseitig mit einem Steueranschluss des Halbleiterschalters (20, 22, 24, 26) verbunden und ausgebildet ist, den Halbleiterschalter (20, 22, 24, 26) zum Erzeugen einer Wechselspannung mit einem Steuersignal (93, 94) anzusteuern, wobei
der Spannungswandler (1) einen Pulssignalerzeuger (35) aufweist, wobei die Treiberstufe (31) eine Eingangskapazität, nämlich wenigstens einen Kondensator (60, 62) aufweist und eingangsseitig mit dem Pulssignalerzeuger (35) verbunden ist, wobei der Pulssignalerzeuger (35) ausgebildet ist, ein Pulssignal (35, 37, 80, 81, 82, 83, 90) zu erzeugen und die Treiberstufe (31) zum Erzeugen des Steuersignals (93, 94) mit dem Pulssignal (35, 37, 80, 81, 82, 83, 90) anzusteuern,
**dadurch gekennzeichnet, dass**
das Pulssignal (35, 37, 80, 81, 82, 83, 90) für wenigstens eine beginnende Halbwelle der Wechselspannung wenigstens einen Vorpuls und einen die Halbwelle erzeugenden Hauptpuls aufweist, wobei die Treiberstufe ausgebildet ist, die elektrische Ladung zum Schalten der Leistungsendstufe wenigstens teilweise aus dem Vorpuls zu erzeugen und dazu in der Eingangskapazität zwischenzuspeichern, wobei der Vorpuls ausgebildet ist, die Eingangskapazität (60, 62) der Treiberstufe (31) derart vorzuladen, dass ein Durchschalten des Halbleiterschalters schneller erfolgen kann als ohne Vorpuls, wobei der Spannungswandler (1) zwei gemeinsam eine H-Brücke bildende Halbleiterschalter-Halbbrücken jeweils umfassend einen High-Side-Transistor (20, 24) und einen Low-Side-Transistor (22, 26) aufweist, wobei die Halbleiterschalter-Halbbrücken jeweils ausgangsseitig mit zueinander verschiedenen Anschlüssen einer Primärwicklung (12) des Transformators (10) verbunden sind und der Pulssignalerzeuger (35) und die Treiberstufe (31) ausgebildet sind, einen Halbleiterschalter (20) eines mit dem Transformator (10) in Serie geschalteten Halbleiterschalterpaares (20, 26) der Halbleiterschalter-Halbbrücken (20, 22, 24, 26), durch den Vorpuls (80, 81, 82, 83) durchzuschalten, wobei das Halbleiterschalterpaar (20, 26) aus zueinander komplementären Transistoren von zwei zueinander verschiedenen Transistor-Halbbrücken der H-Brücke gebildet ist, und wobei ein weiterer Halbleiterschalter (26) des Halbleiterschalterpaares (20, 26) während des Vorpulses (80, 81, 82, 83) gesperrt ist.

2. Spannungswandler (1) nach Anspruch 1,
**dadurch gekennzeichnet, dass** der Pulssignalerzeuger (35) ausgebildet ist, Vorpulse (80, 81, 82, 83) für die zwei Halbleiterschalter-Halbbrücken zeitlich zueinander beabstandet zu erzeugen, wobei während eines Vorpulses nur ein Transistor der zwei Halbbrücken durchgeschaltet ist, so dass der Transformator durch die Vorpulse nicht bestromt werden kann und die durch die Vorpulse repräsentierte elektrische Energie in der Eingangskapazität gespeichert werden kann.

3. Spannungswandler (1) nach Anspruch 1,
**dadurch gekennzeichnet, dass**
der Pulssignalerzeuger (35) ausgebildet ist, die Treiberstufe (31) derart anzusteuern, dass die High-Side-Halbleiterschalter (20, 24) zeitsynchron mit einem Vorpuls (84, 85, 86, 87) beaufschlagt werden können und danach die Low-Side-Halbleiterschalter (22, 26) mittels eines Vorpulses (85, 86) zueinander zeitsynchron durchgesteuert werden können.

4. Spannungswandler (1) nach einem der vorhergehenden Ansprüche,
**dadurch gekennzeichnet, dass**
die Treiberstufe mit der Leistungsendstufe galvanisch verbunden ist und die Leistungsendstufe und/oder die Treiberstufe von dem Pulssignalerzeuger galvanisch getrennt ist.

5. Spannungswandler (1) nach einem der vorhergehenden Ansprüche,
**dadurch gekennzeichnet, dass**
der Spannungswandler zum Erzeugen der Wechselspannung nur eine Spannungsquelle aufweist, welche durch den Pulssignalerzeuger gebildet ist.

6. Verfahren zum gepulsten Ansteuern eines Spannungswandlers (1), wobei der Spannungswandler (1) eine Treiberstufe (31) mit einer Eingangskapazität (60, 62) und eine ausgangsseitig mit der Treiberstufe (31) verbundene Leistungsendstufe (7) und einen ausgangsseitig mit der Leistungsendstufe (7) verbundenen Transformator (10) aufweist, wobei bei dem Verfahren in einem Zeitintervall (75, 77) ein Vorpuls (80, 81, 82, 83, 84, 85, 86, 87) erzeugt wird und die Eingangskapazität der Treiberstufe mit dem Vorpuls (80, 81, 82, 83, 84, 85, 86, 87) vorgeladen wird, und zeitlich auf den Vorpuls (80, 81, 82, 83, 84, 85, 86, 87) folgend ein Hauptpuls (90) erzeugt wird, wobei die Eingangskapazität zum Durchschalten der Leistungsendstufe wenigstens teilweise entladen wird, wobei die Leistungsendstufe (7) des Spannungswandlers (1) zwei Halbleiterschalter-Halbbrücken jeweils umfassend einen High-Side-Halbleiterschalter (20, 24) und einen Low-Side-Halbleiterschalter (22, 26) aufweist, wobei die Halbleiterschalter-Halbbrücken jeweils ausgangsseitig mit zueinander verschiedenen Anschlüssen (28, 30) einer Primärwicklung (12) des Transformators (10) verbunden sind, wobei einen Halbleiterschalter (20) eines mit dem Transformator (10) in Serie geschalteten Halbleiterschalterpaares (20, 26) der Halbleiterschalter-Halbbrücken (20, 22, 24, 26), durch den Vorpuls (80, 81, 82, 83) durchgeschaltet wird, wobei das Halbleiterschalterpaar (20, 26) aus zueinander komplementären Transistoren von zwei zueinander verschiedenen Transistor-Halbbrücken der H-Brücke gebildet ist, und wobei ein weiterer Halbleiterschalter (26) des Halbleiterschalterpaares (20, 26) während des Vorpulses (80, 81, 82, 83) gesperrt ist.

7. Verfahren nach Anspruch 6,
bei dem die High-Side-Halbleiterschalter (20, 24) der Halbleiterschalter-Halbrücken zeitsynchron mit einem Vorpuls (84, 85, 86, 87) beaufschlagt werden und danach die Low-Side-Halbleiterschalter (22, 26) mittels eines Vorpulses (85, 86) zueinander zeitsynchron durchgesteuert werden.

## Claims

1. Voltage converter (1) for a motor vehicle, having a transformer (10) and a power output stage (7), wherein the power output stage (7) has at least two semiconductor switches (20, 22, 24, 26) connected to the transformer (10), in particular to a primary winding (12) of the transformer (10), and the voltage converter (1) has a driver stage (31), the output side of which is connected to a control connection of the semiconductor switch (20, 22, 24, 26) and which is designed to actuate the semiconductor switch (20, 22, 24, 26) for the purpose of generating an AC voltage using a control signal (93, 94), wherein the voltage converter (1) has a pulse signal generator (35), wherein the driver stage (31) has an input capacitance, namely at least one capacitor (60, 62), and the input side of said driver stage is connected to the pulse signal generator (35), wherein the pulse signal generator (35) is designed to generate a pulse signal (35, 37, 80, 81, 82, 83, 90) and to actuate the driver stage (31) for the purpose of generating the control signal (93, 94) using the pulse signal (35, 37, 80, 81, 82, 83, 90),
**characterized in that**
the pulse signal (35, 37, 80, 81, 82, 83, 90) has, for at least a beginning half-cycle of the AC voltage, at least one prepulse and a main pulse generating the half-cycle, wherein the driver stage is designed to generate the electrical charge for switching the power output stage at least partly from the prepulse and also to buffer-store said electrical charge in the input capacitance, wherein the prepulse is designed to precharge the input capacitance (60, 62) of the driver stage (31) in such a way that the semiconductor switch can be turned on more quickly than without a prepulse, wherein the voltage converter (1) has two semiconductor switch half-bridges, which together form a H-bridge, each comprising a high-side transistor (20, 24) and a low-side transistor (22, 26), wherein the output side of each of the semiconductor switch half-bridges are connected to connections of a primary winding (12) of the transformer (10), which connections are different from one another, and the pulse signal generator (35) and the driver stage (31) are designed to turn on a semiconductor switch (20) of a semiconductor switch pair (20, 26) of the semiconductor switch half-bridges (20, 22, 24, 26), which pair is connected in series with the transformer (10), by the prepulse (80, 81, 82, 83), wherein the semiconductor switch pair (20, 26) of transistors complementary to one another is formed by two transistor half-bridges of the H-bridge, which are different from one another, and wherein a further semiconductor switch (26) of the semiconductor switch pair (20, 26) is blocked during the prepulse (80, 81, 82, 83) .

2. Voltage converter (1) according to Claim 1, **characterized in that** the pulse signal generator (35) is designed to generate prepulses (80, 81, 82, 83) for the two semiconductor switch half-bridges in a manner temporally spaced apart from one another, wherein only one transistor of the two half-bridges is turned on during a prepulse so that the transformer cannot be energized by the prepulses and the electrical energy represented by the prepulses can be stored in the input capacitance.

3. Voltage converter (1) according to Claim 1, **characterized in that** the pulse signal generator (35) is designed to actuate the driver stage (31) in such a way that the high-side semiconductor switches (20, 24) can be supplied with a prepulse (84, 85, 86, 87) in a synchronous manner and the low-side semiconductor switches (22, 26) can then be turned on synchronously with one another by means of a prepulse (85, 86).

4. Voltage converter (1) according to one of the preceding claims, **characterized in that** the driver stage is galvanically connected to the power output stage and the power output stage and/or the driver stage is galvanically isolated from the pulse signal generator.

5. Voltage converter (1) according to one of the preceding claims, **characterized in that** the voltage converter has only one voltage source for generating the AC voltage, said voltage source being formed by the pulse signal generator.

6. Method for the pulsed actuation of a voltage converter (1), wherein the voltage converter (1) has a driver stage (31) having an input capacitance (60, 62) and a power output stage (7), the output side of which is connected to the driver stage (31), and a transformer (10), the output side of which is connected to the power output stage (7), wherein, in the method, a prepulse (80, 81, 82, 83, 84, 85, 86, 87) is generated at a time interval (75, 77) and the input capacitance of the driver stage is precharged using the prepulse (80, 81, 82, 83, 84, 85, 86, 87) and a main pulse (90) is generated temporally following the prepulse (80, 81, 82, 83, 84, 85, 86, 87), wherein the input capacitance is at least partially discharged for the purpose of turning on the power output stage, wherein the power output stage (7) of the voltage converter (1) has two semiconductor switch half-bridges each comprising a high-side semiconductor switch (20, 24) and a low-side semiconductor switch (22, 26), wherein the output side of each of the semiconductor switch half-bridges are connected to connections (28, 30) of a primary winding (12) of the transformer (10), which connections are different from one another, wherein a semiconductor switch (20) of a semiconductor switch pair (20, 26) of the semiconductor switch half-bridges (20, 22, 24, 26), which pair is connected in series with the transformer (10), is turned on by the prepulse (80, 81, 82, 83), wherein the semiconductor switch pair (20, 26) of transistors complementary to one another is formed by two transistor half-bridges of the H-bridge, which are different from one another, and wherein a further semiconductor switch (26) of the semiconductor switch pair (20, 26) is blocked during the prepulse (80, 81, 82, 83).

7. Method according to Claim 6, in which the high-side semiconductor switches (20, 24) of the semiconductor switch half-bridges are supplied with a prepulse (84, 85, 86, 87) in a synchronous manner and the low-side semiconductor switches (22, 26) are then turned on synchronously with one another by means of a prepulse (85, 86).

## Revendications

1. Convertisseur de tension (1) pour un véhicule automobile,
comprenant un transformateur (10) et un étage final de puissance (7), l'étage final de puissance (7) possédant au moins deux commutateurs à semiconducteurs (20, 22, 24, 26) reliés au transformateur (10), notamment à un enroulement primaire du transformateur, et le convertisseur de tension (1) possède un étage d'attaque (31) dont la sortie est reliée à une borne de commande du commutateur à semiconducteur (20, 22, 24, 26) et qui est configuré pour piloter les commutateurs à semiconducteurs (20, 22, 24, 26) avec un signal de commande (93, 94) en vue de générer une tension alternative,
le convertisseur de tension (1) possédant un générateur de signal impulsionnel (35), l'étage d'attaque (31) possédant une capacité d'entrée, à savoir au moins un condensateur (60, 62) et son entrée étant reliée au générateur de signal impulsionnel (35), le générateur de signal impulsionnel (35) étant configuré pour générer un signal impulsionnel (35, 37, 80, 81, 82, 83, 90) et piloter l'étage d'attaque (31) avec le signal impulsionnel (35, 37, 80, 81, 82, 83, 90) en vue de générer le signal de commande (93, 94),
**caractérisé en ce que**
le signal impulsionnel (35, 37, 80, 81, 82, 83, 90), pendant au moins une demi-onde de démarrage de la tension alternative, possède au moins une préimpulsion et une impulsion principale qui génère l'onde principale, l'étage d'attaque étant configuré pour générer la charge électrique destinée à commuter l'étage final de puissance au moins partiellement à partir de la préimpulsion et la stocker temporairement à cet effet dans la capacité d'entrée, la préimpulsion étant configurée pour précharger la capacité d'entrée (60, 62) de l'étage d'attaque (31) de telle sorte qu'une commutation en conduction du commutateur à semiconducteur puisse être effectuée plus rapidement qu'en l'absence de préimpulsion, le convertisseur de tension (1) possédant deux demi-ponts de commutateurs à semiconducteur formant ensemble un pont en H, comportant respectivement un transistor côté haut (20, 24) et un transistor côté bas (22, 26), la sortie des demi-ponts de commutateurs à semiconducteur étant respectivement reliée à des bornes mutuellement différentes d'un enroulement primaire (12) du transformateur (10) et le générateur de signal impulsionnel (35) et l'étage d'attaque (31) étant configurés pour une commutation en conduction, par la préimpulsion (80, 81, 82, 83), un commutateur à semiconducteur (20) d'une paire de commutateurs à semiconducteur (20, 26) branchée en série avec le transformateur (10) parmi les demi-ponts de commutateurs à semiconducteur (20, 22, 24, 26), la paire de commutateurs à semiconducteur (20, 26) étant constituée de transistors mutuellement complémentaires de deux demi-ponts à transistors mutuellement différents du pont en H, et un commutateur à semiconducteur (26) supplémentaire de la paire de commutateurs à semiconducteur (20, 26) étant bloqué pendant la préimpulsion (80, 81, 82, 83).

2. Convertisseur de tension (1) selon la revendication 1, **caractérisé en ce que** le générateur de signal impulsionnel (35) est configuré pour générer les préimpulsions (80, 81, 82, 83) pour les deux demi-ponts de commutateurs à semiconducteur espacées dans le temps entre elles, un seul transistor des deux demi-ponts étant commuté en conduction pendant une préimpulsion, de sorte que le transformateur ne puisse pas être alimenté avec la préimpulsion et que l'énergie électrique représentée par la préimpulsion puisse être stockée dans la capacité d'entrée.

3. Convertisseur de tension (1) selon la revendication 1, **caractérisé en ce que** le générateur de signal impulsionnel (35) est configuré pour piloter l'étage d'attaque (31) de telle sorte que les commutateurs à semiconducteur côté haut (20, 24) puissent être chargés de manière synchronisée dans le temps avec une préimpulsion (84, 85, 86, 87) et les commutateurs à semiconducteur côté bas (22, 26) puissent ensuite être commandé en conduction de manière synchronisée dans le temps entre eux au moyen d'une préimpulsion (85, 86).

4. Convertisseur de tension (1) selon l'une des revendications précédentes, **caractérisé en ce que** l'étage d'attaque est relié galvaniquement à l'étage final de puissance et l'étage final de puissance et/ou l'étage d'attaque sont isolés galvaniquement du générateur de signal impulsionnel.

5. Convertisseur de tension (1) selon l'une des revendications précédentes, **caractérisé en ce que** le convertisseur de tension, pour la génération d'une tension alternative, ne possède qu'une seule source de tension qui est formée par le générateur de signal impulsionnel.

6. Procédé de pilotage impulsionnel d'un convertisseur de tension (1), le convertisseur de tension (1) possédant un étage d'attaque (31) pourvu d'une capacité d'entrée (60, 62) et un étage final de puissance (7) relié du côté de la sortie à l'étage d'attaque (31) ainsi qu'un transformateur relié du côté de la sortie à l'étage final de puissance (7), procédé selon lequel une préimpulsion (80, 81, 82, 83, 84, 85, 86, 87) est généré dans un intervalle de temps (75, 77) et la capacité d'entrée de l'étage d'attaque est préchargé avec la préimpulsion (80, 81, 82, 83, 84, 85, 86, 87), puis une impulsion principale (90) est générée chronologiquement à la suite de la préimpulsion (80, 81, 82, 83, 84, 85, 86, 87), la capacité d'entrée étant au moins partiellement déchargée pour commuter ne conduction l'étage final de puissance, l'étage final de puissance (7) du convertisseur de tension (1) possédant deux demi-ponts de commutateurs à semiconducteur comportant respectivement un commutateur à semiconducteur côté haut (20, 24) et un commutateur à semiconducteur côté bas (22, 26), les demi-ponts de commutateurs à semiconducteur étant respectivement reliés du côté de la sortie avec des bornes (28, 30) mutuellement différentes d'un enroulement primaire (12) du transformateur, un commutateur à semiconducteur (20) d'une paire de commutateurs à semiconducteur (20, 26) branchée en série avec le transformateur (10) parmi les demi-ponts de commutateurs à semiconducteur (20, 22, 24, 26) étant commuté en conduction par la préimpulsion (80, 81, 82, 83), la paire de commutateurs à semiconducteur (20, 26) étant constituée de transistors mutuellement complémentaires de deux demi-ponts à transistors mutuellement différents du pont en H, et un commutateur à semiconducteur (26) supplémentaire de la paire de commutateurs à semiconducteur (20, 26) étant bloqué pendant la préimpulsion (80, 81, 82, 83).

7. Procédé selon la revendication 6, selon lequel les commutateurs à semiconducteur côté haut (20, 24) des demi-ponts de commutateurs à semiconducteur sont chargés de manière synchronisée dans le temps avec une préimpulsion (84, 85, 86, 87) et les commutateurs à semiconducteur côté bas (22, 26) sont ensuite commandés en conduction de manière synchronisée dans le temps entre eux au moyen d'une préimpulsion (85, 86).
